# EUROPÄISCHE PATENTSCHRIFT

(11) **EP 4 143 028 B1**
(45) Veröffentlichungstag und Bekanntmachung des Hinweises auf die Patenterteilung: **29.11.2023**
(21) Anmeldenummer: 22701216.8
(22) Anmeldetag: 19.01.2022
(51) Int. Cl.: B41F 21/12, B41F 23/04, B41F 21/05, B41F 21/10, B41F 13/193, B41F 13/22, B29C 71/04, G21K 5/10

(54) **TRANSPORTZYLINDER, TROCKNUNGSEINHEIT MIT DIESEM TRANSPORTZYLINDER UND BOGENDRUCKMASCHINE MIT DIESER TROCKNUNGSEINHEIT**
TRANSPORT CYLINDER, DRYING UNIT HAVING SAID TRANSPORT CYLINDER, AND SHEET-FED PRESS HAVING SAID DRYING UNIT
CYLINDRE DE TRANSPORT, UNITÉ DE SÉCHAGE DOTÉE DUDIT CYLINDRE DE TRANSPORT, ET PRESSE ALIMENTÉE EN FEUILLES DOTÉE DE LADITE UNITÉ DE SÉCHAGE

(30) Priorität: 11.03.2021 DE 102021105926
(43) Veröffentlichungstag der Anmeldung: 08.03.2023
(73) Patentinhaber: Koenig & Bauer AG, 97080 Würzburg (DE)
(72) Erfinder: HAHN, Thilo, 97337 Dettelbach (DE); KRESS, Patrick, 97980 Bad Mergentheim-Edelfingen (DE); SCHARKUS, Volker, 97209 Veitshöchheim (DE); STIERMAN, Robert, 2408MS Alphen aan den Rijn (NL)
(74) Vertreter: Koenig & Bauer AG
(86) Internationale Anmeldenummer: PCT/EP2022/051065
(87) Internationale Veröffentlichungsnummer: WO 2022/189048

(56) Entgegenhaltungen:
- WO-A1-2020/200703
- JP-A- H0 839 778
- US-A1- 2015 246 525

## Beschreibung

Die Erfindung betrifft einen Transportzylinder gemäß dem Oberbegriff des Anspruches 1 und eine Trocknungseinheit gemäß Anspruch 8 sowie eine Bogendruckmaschine mit dieser Trocknungseinheit gemäß Anspruch 13.

Durch die DE 28 55 605 C2 ist eine Vorrichtung zur Inertisierung und Abschirmung beschichteter, durch eine Inertisierungskammer hindurchlaufender biegsamer Bänder wie z. B. Folien bekannt, wobei die Bänder ionisierenden Strahlungen ausgesetzt werden, wobei die Bänder auf dem gekühlten Mantel einer drehbar gelagerten Walze entlang einer gebogenen Bahn durch die z. B. Stickstoff als Inertgas enthaltene Inertisierungskammer hindurchgeführt werden.

Durch die DE 10 2015 013 068 A1 ist eine Trockenvorrichtung mit einem Zylinder zum Transport eines bedruckten Bogens durch eine Trockenvorrichtung bekannt, mit wenigstens einer Greiferleiste zum Fixieren einer Vorderkante des Bogens an einem Mantel des Zylinders und Mitteln zum Erzeugen eines Unterdrucks am Mantel, der den Bogen flächig am Mantel angedrückt hält, wobei ein Bestrahlungsmodul, insbesondere ein UV-Bestrahlungsmodul, dem Zylinder zugewandt ist, wobei die Mittel mehrere Unterdruckkammern umfassen, die im Zylinder in Umfangsrichtung verteilt sind, und in die Bohrungen des Mantels einmünden.

Durch die DE 11 2012 006 348 B4 ist eine Kombinationsdruckvorrichtung bekannt, welche zumindest eine Einheit zum Lichthärten von Druckfarben aufweist, wobei die Einheit zum Lichthärten von Druckfarben eine UV- und /oder Infrarottrockenvorrichtung und einen Papiertransport- und Trockenzylinder zum Kühlen und Festhalten beinhaltet, wobei die Wandung dieses Zylinder mit einem mit einer Kühlwasserleitung in Verbindung stehenden Kühlkanal und mit einer Luftkammer in Verbindung stehenden Ansaugluftöffnungen versehen ist.

Durch die JP H08-39 778 A ist ein Transportzylinder in einem Lackwerk bekannt, wobei dieser Zylinder in seiner Wandung eine Kühleinrichtung aufweist.

Durch die nachveröffentlichte DE 20 2021 001 239 U1 ist eine Vorrichtung zur Kühlung einer Greiferbrücke an einer Bogentransporteinrichtung in einer Druckmaschine bekannt, wobei die Bogentransporteinrichtung als Zylinder mit mindestens einer Leitung für Kühlflüssigkeit ausgebildet ist, wobei die Greiferbrücke und eine Wand der Leitung miteinander in Kontakt stehen.

Durch die WO 2020/108864 A1 ist eine Trocknungseinheit zum Trocknen bedruckter Substrate bekannt, mit einer Kammer mit einem durch ein Inertgas sauerstoffreduzierten gasförmigen Medium, wobei die Substrate durch diese Kammer hindurch geführt oder zumindest führbar sind, wobei die Kammer in Transportrichtung der Substrate einen Eingang für die in diese Kammer zu führenden Substrate aufweist, wobei der Eingang für in die Kammer zu führende Substrate durch zwei jeweils längs gegeneinander angestellte Zylinder ausgebildet ist, wobei die beiden am Eingang der Kammer gegeneinander angestellten Zylinder ein Druckwerk ausbilden, wobei einer der Zylinder als ein Druckzylinder und der andere Zylinder als ein mit dem Druckzylinder zusammenwirkender ein Druckbild auf die betreffenden Substrate auftragender Zylinder ausgebildet sind, wobei die beiden mit Druck gegeneinander angestellten Zylinder am Eingang der Kammer eine axial zu diesen Zylindern verlaufende Dichtung gegen ein Entweichen des sauerstoffreduzierten gasförmigen Mediums aus dieser Kammer und/oder gegen ein Eintreten von Sauerstoff aus der Umgebungsluft in diese Kammer ausbilden, wobei das am Eingang der Kammer angeordnete Druckwerk als ein in einem Tiefdruckverfahren druckendes Druckwerk ausgebildet ist.

Wenn in einer industriellen Massenproduktion von Druckerzeugnissen ein Trocknen von auf einem Substrat aufgebrachten Fluiden beschleunigt und Trocknungsstrecken verkürzt werden sollen, kommt ein Einsatz von Trocknern in Betracht, die das zu trocknende Fluid im Vergleich zu konventionellen, z. B. durch Heißluft und/oder durch eine InfrarotBestrahlung trocknenden Trocknern in sehr kurzer Zeit mit einer deutlich höheren Energiedichte beaufschlagen. Wenn zudem anstelle eines z. B. wasserbasierten Druckfluids auf dem jeweiligen Substrat ein strahlungshärtendes Druckfluid in Form z. B. einer strahlungshärtenden Druckfarbe, Tinte oder eines entsprechenden Lackes aufgetragen wird, erfolgt die Trocknung dieses Druckfluids nicht durch Verdunstung oder Wegschlagen seines Lösemittels, sondern durch eine Härtung seines mindestens einen in diesem Druckfluid enthaltenen Polymers, z. B. eines Acrylat-Oligomers und -Monomers, wodurch dieses mindestens eine Polymer bei seiner strahlungsinduzierten Polymerisation in den aus diesem Druckfluid auf der Oberfläche des betreffenden Substrates entstehenden Film eingebunden wird. Die Durchführung der Härtung eines strahlungshärtenden Druckfluids kann in einem Produktionsprozess mit einer nicht allzu hohen Produktionsgeschwindigkeit z. B. mit einer UV-Strahlungsquelle erfolgen. Die Trocknungszeit verkürzt sich gegenüber der üblicherweise erforderlichen Einwirkdauer von UV-Strahlungsquellen auf das zu trocknende, d. h. in diesem Fall zu härtende Druckfluid jedoch deutlich bis in den Bereich lediglich von wenigen Millisekunden, wenn eine hochenergetische Strahlungsquelle wie z. B. eine Elektronenstrahlquelle verwendet wird, so dass die Härtung eines strahlungshärtenden Druckfluids auch in Produktionsprozessen mit einer sehr hohen Produktionsgeschwindigkeit möglich wird. Als hohe Produktionsgeschwindigkeit sollen hier z. B. im Bogendruck Produktionsprozesse mit einem Durchsatz von deutlich mehr als 10.000 Druckbogen pro Stunde gelten.

Bei der Verwendung einer Elektronenstrahlquelle gilt es jedoch zu beachten, dass ein Auftreffen von Elektronenstrahlen auf ein Substrat und ein Eindringen dieser Strahlen in ein Druckfluid i. d. R. mit einer Erzeugung von allseitig reflektierten Röntgenstrahlen und mit einer teilweisen Umwandlung in Wärmestrahlen einhergehen, so dass im Unterschied zum Einsatz einer UV-Strahlungsquelle bei einer Elektronenstrahlquelle zumindest geeignete Strahlenschutzmaßnahmen notwendig sind. Auch führen die Wärmestrahlen gerade bei einer industriellen Massenproduktion von derart getrockneten Substraten zu einer erheblichen Erwärmung des das jeweilige Substrat durch die Trocknungskammer der betreffenden Trocknungseinheit transportierenden Transporteinrichtung. Zudem muss die durch eine Elektronenstrahlquelle initiierte Härtung, d. h. die durch die Polymerisation ausgeführte Abbindereaktion des Druckfluids, in einer sauerstoffreduzierten, inerten Atmosphäre stattfinden, in welcher zur Erzielung einer hohen Produktionsqualität der Sauerstoffanteil bei höchstens 1% liegen darf, vorzugsweise in einem Bereich zwischen 300 ppm und 500 ppm, insbesondere im Bereich zwischen 150 ppm und 250 ppm, gegebenenfalls noch niedriger bis in den Bereich von weniger als 50 ppm, so dass erhebliche Maßnahmen zur Abdichtung der Trocknungskammer erforderlich sind. Aufgrund der hohen Anforderungen an die Abdichtung der Trocknungskammer ist es auch nachteilig, die die Substrate durch die Trocknungskammer transportierende z. B. als ein Transportzylinder ausgebildete Transporteinrichtung als ein Saugzylinder auszubilden, weil die an der Mantelfläche des Saugzylinders ausgebildeten Saugluftöffnungen ein Aufrechterhalten der sauerstoffreduzierten, inerten Atmosphäre in der Trocknungskammer zumindest erheblich erschweren, wenn nicht sogar praktisch unmöglich machen. Ein Trockner mit einer Elektronenstrahlquelle erfordert an seinem Einsatzort somit grundsätzlich einen größeren konstruktiven Aufwand als die Verwendung eines konventionellen Trockners oder einer UV-Strahlungsquelle.

Gerade aufgrund der Dichtungsproblematik wurde gemäß der DE 28 55 605 C2 davon abgesehen, bogenförmige Substrate durch die Trocknungskammer eines eine Elektronenstrahlquelle verwendenden Trockners zu führen, weil bogenförmige Substrate im Gegensatz zu einer Materialbahn für ihren betriebssicheren Transport an ihrer jeweiligen z. B. als ein Zylinder ausgebildeten Transporteinrichtung gehalten werden müssen. Bei der beschleunigten Trocknung von bogenförmigen, von einem Transportzylinder durch ein Bestrahlungsmodul transportierten mit einem strahlungshärtenden Druckfluid bedruckten Substraten wurde bisher ausweislich der DE 10 2015 013 068 A1 zur Vermeidung notwendiger Maßnahmen zum Strahlenschutz und aufgrund der Dichtungsproblematik eine UV-Strahlungsquelle verwendet. Und falls man trotz der erforderlichen Strahlenschutzmaßnahmen und der Dichtungsproblematik zur Trocknung bogenförmiger, mit einem strahlungshärtenden Druckfluid bedruckter Substrate eine Elektronenstrahlquelle verwenden wollte, empfiehlt die WO 2020/108864 A1 für den Transport dieser Substrate durch die Trocknungskammer die Verwendung eines greiferlos ausgebildeten Transportzylinders oder eines Transportbandes.

Durch die WO 2020/200 703 A1 ist eine Druckmaschine mit mindestens einer ein oder mehrere Druckwerke umfassenden Druckeinheit bekannt, durch welche bogenförmiges Substrat zumindest einseitig an wenigstens einer Druckstelle bedruckbar ist und mit mindestens einer Produktaufnahme, in welcher das bedruckte bogenförmige Substrat zu Gebinden von Produkten oder Zwischenprodukten zusammenfassbar ist, wobei im Substratpfad ein das bogenförmige Substrat führender und/oder fördernder rotierbarer Kühlzylinder der Produktaufnahme vorgeordnet und der mindestens einen ein oder mehrere Druckwerke umfassenden Druckeinheit nachgeordnet ist, wobei zumindest eine erste Elektrode derart am über einen Umfangsabschnitt des Kühlzylinders verlaufenden Substratpfadabschnitt angeordnet und auf denselben gerichtet ist, so dass bei anliegender elektrischer Spannung auf dem Substratpfad an der Elektrode vorübergeführtes Substrat elektrostatisch aufladbar ist bzw. aufgeladen wird.

Durch die US 2015/246 525 A1 ist ein Vakuumtrommelsystem für eine Bedruckstoffbogen verarbeitende Maschine bekannt, umfassend Saugnuten zum pneumatischen Festhalten des Bedruckstoffbogens, wobei in den Saugnuten Verschlussschieber angeordnet sind, wobei die Vakuumtrommel z. B. einen Zylinderkanal und Aufnahmenuten hat, und wobei die Verschlussschieber in einer Einstellung den Zylinderkanal überbrücken und in den Aufnahmenuten stecken.

Der Erfindung liegt nun die Aufgabe zugrunde, einen Transportzylinder zum Transportieren eines bogenförmigen Substrats, eine Trocknungseinheit zum Trocknen eines strahlungshärtenden Druckfluids auf einem bogenförmigen Substrat und eine Bogendruckmaschine mit dieser Trocknungseinheit zu schaffen.

Die Aufgabe wird erfindungsgemäß durch die Merkmale des Anspruches 1, 8 und 13 gelöst. Die jeweils abhängigen Ansprüche betreffen jeweils vorteilhafte Ausgestaltungen und/oder Weiterbildungen der gefundenen Lösung.

Die mit der Erfindung erzielbaren Vorteile bestehen insbesondere darin, dass mit dem vorgeschlagenen Transportzylinder bogenförmige Substrate insbesondere während ihres Transports durch eine Trocknungskammer einer mittels eines Elektronenstrahls trocknenden Trocknungseinheit betriebssicher an der Mantelfläche des betreffenden Transportzylinders gehalten werden, wobei sich aufgrund der Abdeckung des betreffenden Kanals und durch die Ausbildung der jeweiligen Greifer als Unterflurgreifer eine gute Abdichtung dieses Transportzylinders gegenüber der eine sauerstoffreduzierte inerte Atmosphäre aufweisenden Trocknungskammer der Trocknungseinheit ergibt und zudem eine durch den Elektronenstrahl erzeugte Wärme zumindest von den jeweils als Greifer ausgebildeten Haltemitteln dieses Transportzylinders zuverlässig abgeführt wird.

Ein Ausführungsbeispiel der Erfindung ist in den Zeichnungen dargestellt und wird im Folgenden näher beschrieben.

Es zeigen:
- Fig. 1: einen Transportzylinder zum Transportieren eines bogenförmigen Substrats;
- Fig. 2: einen Ausschnitt aus der Fig. 1;
- Fig. 3: eine Trocknungseinheit mit einem Transportzylinder gemäß Fig. 1 und 2.

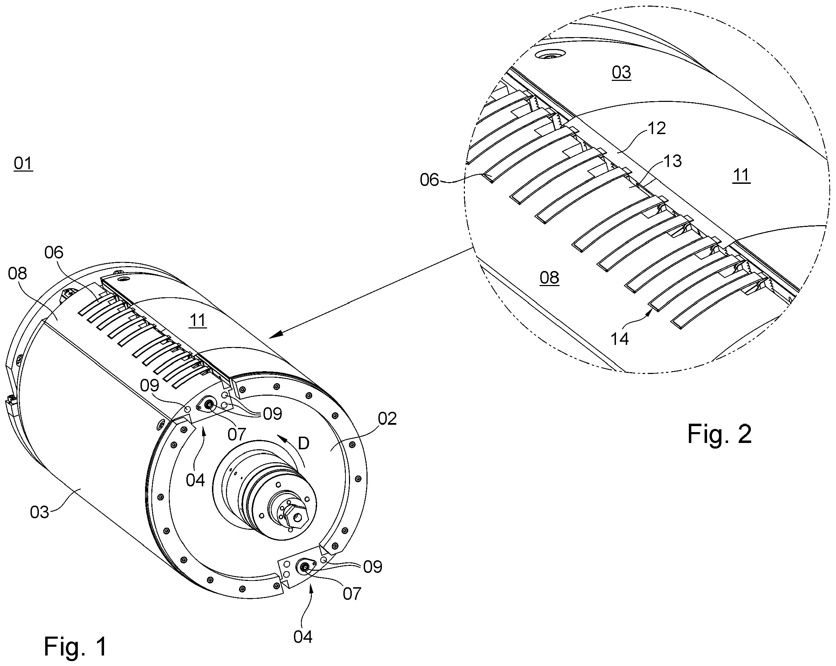

In der Fig. 1 ist beispielhaft ein Transportzylinder 01 zum Transportieren eines bogenförmigen, z. B. mit einem Druckfluid bedruckten Substrats 11 perspektivisch dargestellt. Die Fig. 2 zeigt in einer Vergrößerung einen Ausschnitt aus dem in der Fig. 1 dargestellten Transportzylinder 01. Dieser Transportzylinder 01 weist in seinem vorzugsweise aus einem Gießwerkstoff, z. B. aus Gusseisen ausgebildeten Grundkörper 02 an seiner vorzugsweise ansonsten zumindest über 90% geschlossenen Mantelfläche 03 mindestens einen sich in Axialrichtung, d. h. quer zur Transportrichtung T des betreffenden Substrats 11 erstreckenden Kanal 04 auf, wobei ein solcher Kanal 04 auch als Zylindergrube bezeichnet wird. Vorzugsweise ist der Transportzylinder 01 doppeltgroß ausgebildet, so dass an seinem Umfang sich diametral gegenüberstehend zwei sich an der Mantelfläche 03 jeweils in dessen Axialrichtung erstreckende Kanäle 04 ausgebildet sind und an seiner Mantelfläche 03 hintereinander z. B. zwei bogenförmige Substrate 11 gehalten werden können. Als doppeltgroß ausgebildeter Transportzylinder 01 hat dieser einen Durchmesser im Bereich von z. B. 500 mm bis 700 mm, vorzugsweise von z. B. 550 mm bis 600 mm. Die Mantelfläche 03 dieses Transportzylinders 01 ist insbesondere insofern geschlossen, als dass an seiner Mantelfläche 03 keine radial in sein Inneres verlaufende Strömungskanäle z. B. zur Führung von Saugluft münden. Die Mantelfläche 03 dieses Transportzylinders 01 weist im Zusammenwirken mit dem jeweiligen Kanal 04 nur dort eine sich jeweils in dessen Axialrichtung erstreckende schlitzförmige Öffnung auf, wo ein Ende des zu transportierenden bogenförmigen Substrats 11 an dieser Mantelfläche 03 gehalten werden soll.

In dem betreffenden Kanal 04 ist jeweils mindestens ein Greifer 06 zum Halten des betreffenden Substrats 11 auf der Mantelfläche 03 dieses Transportzylinders 01 angeordnet. In einer besonders bevorzugten Ausführung ist in dem betreffenden Kanal 04 jeweils eine Greiferleiste mit mehreren, z. B. zehn oder mehr in Axialrichtung dieses Transportzylinders 01 nebeneinander angeordneten Greifern 06 vorgesehen. Der mindestens eine Greifer 06 ist auf einer sich in Axialrichtung dieses Transportzylinders 01 erstreckenden Welle 07 schwenkbar gelagert, wobei diese Welle 07 in dem betreffenden Kanal 04 z. B. mit einer Feder, insbesondere mit einer Torsionsfeder zusammenwirkend angeordnet ist. In einem ersten Betriebszustand ist der mindestens eine Greifer 06 durch eine von einer Stelleinrichtung bewirkten Schwenkbewegung insbesondere gegen die Kraft der betreffenden Feder in eine erste Position geschwenkt, in welcher ein vorderes Ende 12 eines auf der Mantelfläche 03 dieses Transportzylinders 01 zu haltenden bogenförmigen Substrates 11 durch eine vom betreffenden Greifer 06 frei gegebene schlitzförmige Öffnung in den betreffenden Kanal 04 einführbar ist. In einem in den Fig. 1 und 2 jeweils dargestellten zweiten Betriebszustand ist der mindestens eine Greifer 06 durch eine von der Stelleinrichtung und/oder von der betreffende Feder bewirkten Schwenkbewegung in eine zweite Position geschwenkt, in welcher das in Drehrichtung D des Transportzylinders 01 vordere Ende 12 des auf der Mantelfläche 03 dieses Transportzylinders 01 zu haltenden bogenförmigen Substrates 11 in dem betreffenden Kanal 04 insbesondere durch eine Klemmung gehalten ist. Die Drehrichtung D des Transportzylinders 01 ist in der Fig. 1 durch einen Drehrichtungspfeil angedeutet. In dieser zweiten Position ist der mindestens eine Greifer 06 vollständig unterhalb einer durch die Mantelfläche 03 dieses Transportzylinders 01 gebildeten Ebene angeordnet, weshalb ein derart angeordneter Greifer 06 auch als ein Unterflurgreifer bezeichnet wird.

Der betreffende Kanal 04 ist an der Mantelfläche 03 dieses Transportzylinders 01 mit einer Abdeckung 08 abgedeckt, wobei die Abdeckung 08 den betreffenden Kanal 04 vorzugsweise in der durch die Mantelfläche 03 dieses Transportzylinders 01 gebildeten Ebene abdeckt und an der Stelle des betreffenden Greifers 06 eine an die an der Mantelfläche 03 dieses Transportzylinders 01 ausgebildete Kontur des betreffenden Greifers 06 angepasste Aussparung 14 aufweist, wobei die Abdeckung 08 im Fall mehrerer in Axialrichtung nebeneinander angeordneter Greifer 06 zwischen benachbarten Greifern 06 an der Mantelfläche 03 dieses Transportzylinders 01 jeweils z. B. zungenartige Bereiche ausbildet (Fig. 2). Die betreffende Abdeckung 08 ist vorzugsweise einstückig z. B. durch ein massives Stahlblech oder durch ein massives, vorzugsweise metallisches Formteil ausgebildet. Außerdem weist die betreffende Abdeckung 08 und/oder die den mindestens einen Greifer 06 lagernde Welle 07 jeweils eine Kühleinrichtung auf. Die betreffende Kühleinrichtung weist z. B. mindestens eine sich in Axialrichtung dieses Transportzylinders 01 erstreckende Rohrleitung 09 und/oder mindestens eine in der betreffenden Abdeckung 08 und/oder in der betreffenden Welle 07 ausgebildete, sich in Axialrichtung dieses Transportzylinders 01 erstreckende durchgängige Bohrung 09 auf, wobei die betreffende Rohrleitung 09 oder die betreffende Bohrung 09 jeweils von einem flüssigen oder gasförmigen Kühlmedium durchströmt oder zumindest durchströmbar ist. Ein Zulauf und/oder ein Ablauf des Kühlmediums ist vorzugsweise jeweils stirnseitig am Grundkörper 02 des Transportzylinders 01 angeordnet, und zwar insbesondere in einem von der Mantelfläche 03 dieses Transportzylinders 01 getrennten Bereich. Wenn in der Welle 07 eine von einem flüssigen oder gasförmigen Kühlmedium durchströmte oder zumindest durchströmbare Bohrung 09 ausgebildet ist, so ist diese Welle 07 insbesondere als eine Hohlwelle ausgebildet.

Als Kühlmedium eignen sich z. B. Wasser oder ein industriell hergestelltes synthetisches Kühlmittel oder Kältemittel. Ein Kältemittel unterscheidet sich von einem Kühlmittel dadurch, dass ein Kältemittel in einem Kältezyklus einen Abtransport von Wärme entgegen einem Temperaturgradienten ausführen kann, so dass die den zu kühlenden Gegenstand - hier den Grundkörper 02 des Transportzylinders 01 und/oder die Abdeckung 08 und/oder den bzw. die Greifer 06 - umgebende Umgebungstemperatur sogar höher sein darf als die Temperatur des zu kühlenden Gegenstandes, während ein Kühlmittel lediglich in der Lage ist, in einem Kühlzyklus die Enthalpie entlang des Temperaturgradienten zu einer Stelle niedrigerer Temperatur zu transportieren.

Der zuvor beschriebene Transportzylinder 01 ist bestens zur Verwendung in einer einen Elektronenstrahl-Generator 18 aufweisenden Trocknungseinheit 16 geeignet, wobei diese Trocknungseinheit 16 ein mit einem strahlungshärtenden Druckfluid bedrucktes Substrat 11 mittels eines Elektronenstrahls durch Auslösung einer Abbindereaktion, d. h. durch eine Härtung dieses Druckfluids trocknet.

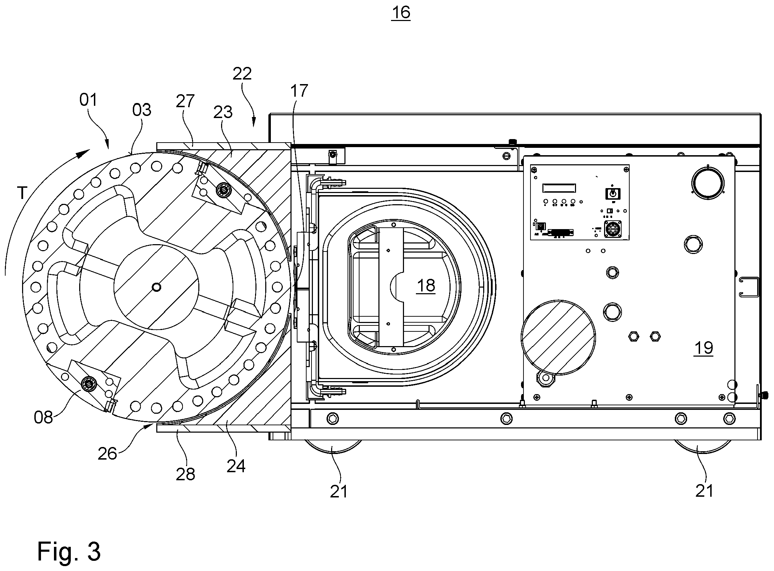

Wie in der Fig. 3 beispielhaft dargestellt ist, ergibt sich eine Trocknungseinheit 16 zum Trocknen eines strahlungshärtenden Druckfluids auf einem bogenförmigen Substrat 11 (vergleiche Fig. 1 und 2), wobei das betreffende Substrat 11 durch eine Kammer 17 mit einem durch ein Inertgas sauerstoffreduzierten gasförmigen Medium geführt wird. Das sauerstoffreduzierte gasförmige Medium weist in der Kammer 17 einen Sauerstoffanteil von höchstens 1% auf. Dieser Sauerstoffanteil liegt vorzugsweise in einem Bereich zwischen 300 ppm und 500 ppm, insbesondere im Bereich zwischen 150 ppm und 250 ppm, gegebenenfalls noch niedriger bis in den Bereich von weniger als 50 ppm. Zum Trocknen des strahlungshärtenden Druckfluids ist ein Elektronenstrahl-Generator 18 mit einem in der Kammer 17 auf das Substrat 11 gerichteten Elektronenstrahl vorgesehen, wobei das Substrat 11 an der Mantelfläche 03 des zuvor beschriebenen Transportzylinders 01 gehalten durch diese Kammer 17 hindurch geführt oder zumindest führbar ist. Dabei beträgt in einem schnell laufenden industriellen Produktionsprozess eine mit der Drehzahl des Transportzylinders 01 einhergehende Produktionsgeschwindigkeit mindestens, vorzugsweise sogar deutlich mehr als 10.000 Substrate 11 pro Stunde, die durch die Kammer 17 der Trocknungseinheit 16 hindurch geführt werden, so dass bei einer solchen Produktionsgeschwindigkeit jedes einzelne z. B. auf einem doppeltgroß ausgebildeten Transportzylinder 01 gehaltene Substrat 11 diese Kammer 17 in maximal 720 ms durchläuft. Daraus wird ersichtlich, dass bei dieser Produktionsgeschwindigkeit mit dem hier beispielhaft angenommenen doppeltgroß ausgebildeten Transportzylinder 01 mit einem Durchmesser im Bereich zwischen 500 mm und 700 mm jeder 1 mm breite sich quer zur Transportrichtung T der Substrate 11 auf deren Oberfläche erstreckende Streifen in nur etwa 2 ms bis 3 ms getrocknet wird. Die durch eine Polymerisation ausgeführte Abbindereaktion des auf dem betreffenden Substrat 11 aufgetragenen strahlungshärtenden Druckfluids muss demnach in sehr kurzer Zeit ausgeführt werden, was nach derzeitigem Kenntnisstand nur bei Verwendung eines Elektronenstrahl-Generators 18 gelingt. In der bevorzugten Ausführung erstreckt sich der Elektronenstrahl streifenförmig über die gesamte sich quer zur Transportrichtung T der Substrate 11 erstreckende Breite dieser Substrate 11 und ist vorzugsweise radial auf die Mantelfläche 03 des Transportzylinders 01 gerichtet, so dass dieser Elektronenstrahl im Wesentlichen jeweils lotrecht auf die Oberfläche des betreffenden Substrats 11 auftrifft. Im Auftreffbereich des Elektronenstrahls wird eine Wärme von einigen hundert Grad Celsius erreicht und beträgt z. B. mehr als 300°C.

Zur Trocknungseinheit 16 gehört auch eine hier nicht näher beschriebene zumindest den Elektronenstrahl-Generator 18 steuernde Steuereinheit 19. Der Elektronenstrahl-Generator 18 und seine Steuereinheit 19 bilden z. B. eine Baueinheit, wobei diese Baueinheit bewegbar, z. B. mittels Rädern 21 fahrbar auf einem Untergrund angeordnet ist. Der Transportzylinder 01 ist hingegen i. d. R. in einem Maschinengestell, insbesondere in einem Gestell einer Bogendruckmaschine ortsfest angeordnet. Zu trocknende zuvor in der Bogendruckmaschine von mindestens einem Druckwerk bedruckte Substrate 11 können dem Transportzylinder 01 der Trocknungseinheit 16 z. B. mittels eines vorzugsweise Greifer aufweisenden ersten Kettenfördersystems zugeführt werden und/oder die in der Trocknungseinheit 16 getrockneten Substrate 11 können z. B. von einem vorzugsweise ebenfalls Greifer aufweisenden zweiten Kettenfördersystem vom besagten Transportzylinder 01 entgegen genommen und weiter z. B. zu einer zu der Bogendruckmaschine gehörenden Auslage transportiert werden. Die Bewegbarkeit der den Elektronenstrahl-Generator 18 und seine Steuereinheit 19 aufweisenden Baueinheit erleichtert die Ausführung von Wartungs- und/oder Reparaturarbeiten an der Trocknungseinheit 16, weil der Transportzylinder 01 und besagte Baueinheit durch eine Fortbewegung dieser Baueinheit auf einfache Weise räumlich voneinander trennbar sind, so dass ein Bereich zwischen dem Transportzylinder 01 und der Elektronenstrahl-Generator 18 für Bedienpersonal zugänglich wird.

Wie zuvor beschrieben, weist der in der Trocknungseinheit 16 angeordnete Transportzylinder 01, der in der Fig. 3 in einem Schnitt durch seinen Grundkörper 02 dargestellt ist, an seiner Mantelfläche 03 mindestens einen sich jeweils quer zur in Drehrichtung D des Transportzylinders 01 gerichteten Transportrichtung T des betreffenden Substrats 11 erstreckenden Kanal 04 auf, wobei in dem betreffenden Kanal 04 jeweils mindestens ein Greifer 06 zum Halten des betreffenden Substrats 11 auf der Mantelfläche 03 dieses Transportzylinders 01 angeordnet ist (Fig. 1 und 2). Der betreffende Kanal 04 ist an der Mantelfläche 03 dieses Transportzylinders 01 mit einer Abdeckung 08 abgedeckt, wobei die Abdeckung 08 an der Stelle des betreffenden Greifers 06 eine Aussparung aufweist. Dabei ist der betreffende Greifer 06 als ein Unterflurgreifer ausgebildet. Zumindest die betreffende Abdeckung 08, gegebenenfalls aber auch eine den mindestens einen Greifer 06 lagernde Welle 07 weisen in der zuvor anhand den Fig. 1 und 2 beschriebenen Weise jeweils eine Kühleinrichtung auf.

Die Trocknungseinheit 16 weist ein Gehäuse 22 auf, welches die zum Elektronenstrahl-Generator 18 gewandte Seite des vorzugsweise horizontal insbesondere im Maschinengestell einer Bogendruckmaschine gelagerten Transportzylinders 01 zumindest während eines Produktionsprozesses etwa halbseitig, d. h. in einem Bogenabschnitt von mindestens 160° einfasst. Dieses den Transportzylinder 01 derart einfassende Gehäuse 22 weist zwei Formteile 23; 24 auf, die symmetrisch zu einer durch den Verlauf des Elektronenstrahls definierten Ebene angeordnet sind, wobei deren der Mantelfläche 03 des Transportzylinders 01 zugewandte äußere Begrenzung jeweils der Kontur dieses Transportzylinders 01 angepasst und zur Ausbildung eines Spaltes 26 in einem Abstand von maximal 3 mm, insbesondere in einem Bereich z. B. zwischen 2 mm und 3 mm zur Mantelfläche 03 des Transportzylinders 01 angeordnet ist. Diese beiden Formteile 23; 24 sind in der Kammer 17 der Trocknungseinheit 16 in einem orthogonal zu der durch den Verlauf des Elektronenstrahls definierten Ebene ausgebildeten Bereich für eine ungehinderte Ausbreitung des Elektronenstrahls beabstandet zueinander angeordnet. Die beiden Formteile 23; 24 weisen zum Strahlenschutz vorzugsweise jeweils eine den Werkstoff Blei aufweisende Abschirmung 27; 28 auf, wobei diese Abschirmung 27; 28 jeweils z. B. in Form von einer Bleiplatte ausgebildet ist. Der zwischen jedem der beiden Formteile 23; 24 und der Mantelfläche 03 des Transportzylinders 01 jeweils ausgebildete Spalt 26 erstreckt sich am Umfang des Transportzylinders 01 vorzugsweise über einen Bogenabschnitt von mindestens 75°, insbesondere mindestens 80° und weist vorzugsweise eine Spaltweite von maximal 3 mm, insbesondere von 2 mm bis 3 mm auf. Ein derart langer und schmaler Spalt 26 bietet einen guten Schutz vor aus der Kammer 17 austretender Strahlung und dichtet diese Kammer 17 auch ausreichend ab, so dass jeweils in keinem nennenswerten Umfang Inertgas aus dieser Kammer 17 entweicht oder Sauerstoff aus der Umgebung in diese Kammer 17 eindringt.

Unter Verwendung der zuvor anhand den Fig. 1 bis 3 beschriebenen Trocknungseinheit 16 ergibt sich eine Bogendruckmaschine mit mindestens einem Druckwerk zum Bedrucken bogenförmiger Substrate 11 mit einem strahlungshärtenden Druckfluid und mit einer dem betreffenden Druckwerk in Transportrichtung T der betreffenden Substrate 11 nachgeordneten Trocknungseinheit 16 zum Trocknen des strahlungshärtenden Druckfluids auf diesen Substraten 11, wobei die Trocknungseinheit 16 eine Kammer 17 mit einem durch ein Inertgas sauerstoffreduzierten gasförmigen Medium aufweist, wobei das sauerstoffreduzierte gasförmige Medium in der Kammer 17 einen Sauerstoffanteil von höchstens 1% aufweist. Zum Trocknen des strahlungshärtenden Druckfluids ist ein Elektronenstrahl-Generator 18 mit einem in der Kammer 17 auf das jeweilige Substrat 11 gerichteten Elektronenstrahl vorgesehen. Das Substrat 11 ist an der Mantelfläche 03 eines in einem Gestell der Bogendruckmaschine ortsfest angeordneten Transportzylinders 01 gehalten durch diese Kammer 17 hindurch geführt oder zumindest führbar, wobei der Transportzylinder 01 an seiner Mantelfläche 03 mindestens einen sich jeweils quer zur Transportrichtung T des betreffenden Substrats 11 erstreckenden Kanal 04 aufweist. Dabei ist in dem betreffenden Kanal 04 jeweils mindestens ein an einer Welle 07 gelagerter Greifer 06 zum Halten des betreffenden Substrats 11 auf der Mantelfläche 03 dieses Transportzylinders 01 angeordnet, wobei der betreffende Greifer 06 in seinem das betreffende Substrat 11 auf der Mantelfläche 03 dieses Transportzylinders 01 haltenden Betriebszustand vollständig unterhalb einer durch die Mantelfläche 03 dieses Transportzylinders 01 gebildeten Ebene angeordnet ist. Der betreffende Kanal 04 ist an der Mantelfläche 03 des Transportzylinders 01 mit einer Abdeckung 08 abgedeckt, wobei die betreffende Abdeckung 08 und/oder die den mindestens einen Greifer 06 lagernde Welle 07 jeweils eine Kühleinrichtung aufweisen.

In vorteilhafter Weise ist bzw. sind ein erstes Kettenfördersystem zum Zuführen von zu trocknenden von dem mindestens einen Druckwerk der Bogendruckmaschine zuvor bedruckten Substraten 11 zu dem Transportzylinder 01 der Trocknungseinheit 16 und/oder ein zweites Kettenfördersystem zum Abführen von in der Trocknungseinheit 16 getrockneten Substraten 11 vom Transportzylinder 01 der Trocknungseinheit 16 z. B. zu einer Auslage dieser Bogendruckmaschine vorgesehen. In einem von dieser Bogendruckmaschine ausgeführten industriellen Produktionsprozess beträgt die mit der Drehzahl des Transportzylinders 01 einhergehende Produktionsgeschwindigkeit mindestens 10.000 Substrate 11 pro Stunde, wobei vorzugsweise alle diese Substrate 11 durch die Kammer 17 der Trocknungseinheit 16 hindurch geführt werden.

### Bezugszeichenliste

- 01: Transportzylinder
- 02: Grundkörper
- 03: Mantelfläche
- 04: Kanal
- 05: -
- 06: Greifer
- 07: Welle
- 08: Abdeckung
- 09: Rohrleitung; Bohrung
- 10: -
- 11: bogenförmiges Substrat
- 12: vorderes Ende (11)
- 13: zungenartiger Bereich (08)
- 14: Aussparung (08)
- 15: -
- 16: Trocknungseinheit
- 17: Kammer
- 18: Elektronenstrahl-Generator
- 19: Steuereinheit
- 20: -
- 21: Rad
- 22: Gehäuse
- 23: Formteil
- 24: Formteil
- 25: -
- 26: Spalt
- 27: Abschirmung
- 28: Abschirmung

- D: Drehrichtung
- T: Transportrichtung

## Patentansprüche

1. Transportzylinder (01) zum Transportieren eines bogenförmigen Substrats (11), mit mindestens einem sich jeweils an seiner Mantelfläche (03) in dessen Axialrichtung erstreckenden Kanal (04), wobei in dem betreffenden Kanal (04) jeweils mindestens ein an einer Welle (07) gelagerter Greifer (06) zum Halten des betreffenden Substrats (11) auf der Mantelfläche (03) dieses Transportzylinders (01) angeordnet ist, wobei der betreffende Kanal (04) an der Mantelfläche (03) dieses Transportzylinders (01) mit einer Abdeckung (08) abgedeckt ist, **dadurch gekennzeichnet, dass** die betreffende Abdeckung (08) und/oder die den mindestens einen Greifer (06) lagernde Welle (07) eine Kühleinrichtung aufweisen.

2. Transportzylinder (01) nach Anspruch 1, **dadurch gekennzeichnet, dass** sein Grundkörper (02) aus einem Gießwerkstoff ausgebildet ist und/oder dass seine Mantelfläche (03) zumindest über 90% geschlossen ausgebildet ist.

3. Transportzylinder (01) nach Anspruch 1 oder 2, **dadurch gekennzeichnet, dass** dieser Transportzylinder (01) doppeltgroß ausgebildet ist, so dass an seinem Umfang sich diametral gegenüberstehend zwei sich an der Mantelfläche (03) jeweils in dessen Axialrichtung erstreckende Kanäle (04) ausgebildet sind.

4. Transportzylinder (01) nach Anspruch 1 oder 2 oder 3, **dadurch gekennzeichnet, dass** die betreffende Abdeckung (08) einstückig durch ein massives Stahlblech oder durch ein massives metallisches Formteil ausgebildet ist und/oder dass die betreffende Abdeckung (08) an der Stelle des betreffenden Greifers (06) eine an die Kontur des betreffenden Greifers (06) angepasste Aussparung (14) aufweist.

5. Transportzylinder (01) nach Anspruch 1 oder 2 oder 3 oder 4, **dadurch gekennzeichnet, dass** der mindestens eine Greifer (06) in seinem das betreffende Substrat (11) auf der Mantelfläche (03) dieses Transportzylinders (01) haltenden Betriebszustand vollständig unterhalb einer durch die Mantelfläche (03) dieses Transportzylinders (01) gebildeten Ebene angeordnet ist.

6. Transportzylinder (01) nach Anspruch 1 oder 2 oder 3 oder 4 oder 5, **dadurch gekennzeichnet, dass** die betreffende Kühleinrichtung mindestens eine sich in Axialrichtung dieses Transportzylinders (01) erstreckende Rohrleitung (09) aufweist, wobei die betreffende Rohrleitung (09) von einem flüssigen oder gasförmigen Kühlmedium durchströmt oder zumindest durchströmbar ist und/oder dass die betreffende Kühleinrichtung mindestens eine in der betreffenden Abdeckung (08) und/oder in der betreffenden Welle (07) ausgebildete sich in Axialrichtung dieses Transportzylinders (01) erstreckende Bohrung (09) aufweist, wobei die betreffende Bohrung (09) von einem flüssigen oder gasförmigen Kühlmedium durchströmt oder zumindest durchströmbar ist.

7. Transportzylinder (01) nach Anspruch 6, **dadurch gekennzeichnet, dass** ein Zulauf und/oder ein Ablauf des Kühlmediums jeweils stirnseitig am Grundkörper (02) dieses Transportzylinders (01) in einem von dessen Mantelfläche (03) getrennten Bereich angeordnet ist.

8. Trocknungseinheit (16) zum Trocknen eines strahlungshärtenden Druckfluids auf einem bogenförmigen Substrat (11), mit einer Kammer (17) mit einem durch ein Inertgas sauerstoffreduzierten gasförmigen Medium, wobei das sauerstoffreduzierte gasförmige Medium in der Kammer (17) einen Sauerstoffanteil von höchstens 1% aufweist, wobei zum Trocknen des strahlungshärtenden Druckfluids ein Elektronenstrahl-Generator (18) mit einem in der Kammer (17) auf das Substrat (11) gerichteten Elektronenstrahl vorgesehen ist, wobei das Substrat (11) an der Mantelfläche (03) eines Transportzylinders (01) gehalten durch diese Kammer (17) hindurch geführt oder zumindest führbar ist, wobei der Transportzylinder (01) an seiner Mantelfläche (03) mindestens einen sich jeweils quer zur Transportrichtung (T) des betreffenden Substrats (11) erstreckenden Kanal (04) aufweist, wobei in dem betreffenden Kanal (04) jeweils mindestens ein an einer Welle (07) gelagerter Greifer (06) zum Halten des betreffenden Substrats (11) auf der Mantelfläche (03) dieses Transportzylinders (01) angeordnet ist, wobei der betreffende Greifer (06) in seinem das betreffende Substrat (11) auf der Mantelfläche (03) dieses Transportzylinders (01) haltenden Betriebszustand vollständig unterhalb einer durch die Mantelfläche (03) dieses Transportzylinders (01) gebildeten Ebene angeordnet ist, wobei der betreffende Kanal (04) an der Mantelfläche (03) des Transportzylinders (01) mit einer Abdeckung (08) abgedeckt ist, wobei die betreffende Abdeckung (08) und/oder die den mindestens einen Greifer (06) lagernde Welle (07) jeweils eine Kühleinrichtung aufweisen.

9. Trocknungseinheit (16) nach Anspruch 8, **dadurch gekennzeichnet, dass** sie ein Gehäuse (22) aufweist, welches die dem Elektronenstrahl-Generator (18) zugewandte Seite des Transportzylinders (01) zumindest während eines Produktionsprozesses in einem Bogenabschnitt von zumindest 150° einfasst.

10. Trocknungseinheit (16) nach Anspruch 9, **dadurch gekennzeichnet, dass** das den Transportzylinder (01) einfassende Gehäuse (22) zwei Formteile (23; 24) aufweist, die symmetrisch zu einer durch den Verlauf des Elektronenstrahls definierten Ebene angeordnet sind, wobei deren der Mantelfläche (03) des Transportzylinders (01) zugewandte äußere Begrenzung jeweils der Kontur dieses Transportzylinders (01) angepasst und zur Ausbildung eines Spaltes (26) in einem Abstand im Bereich von maximal 3 mm zur Mantelfläche (03) des Transportzylinders (01) angeordnet ist.

11. Trocknungseinheit (16) nach Anspruch 10, **dadurch gekennzeichnet, dass** die beiden Formteile (23; 24) jeweils eine Blei aufweisende Abschirmung (27; 28) aufweisen.

12. Trocknungseinheit (16) nach Anspruch 10 oder 11, **dadurch gekennzeichnet, dass** sich der jeweilige zwischen einem der beiden Formteile (23; 24) und der Mantelfläche (03) des Transportzylinders (01) ausgebildete Spalt (26) am Umfang des Transportzylinders (01) jeweils über einen Bogenabschnitt von mindestens 75° erstreckt und/oder dass der jeweilige zwischen einem der beiden Formteile (23; 24) und der Mantelfläche (03) des Transportzylinders (01) ausgebildete Spalt (26) jeweils eine Spaltweite im Bereich zwischen 2 mm und 3 mm aufweist.

13. Bogendruckmaschine mit mindestens einem Druckwerk zum Bedrucken bogenförmiger Substrate (11) mit einem strahlungshärtenden Druckfluid und mit einer dem betreffenden Druckwerk in Transportrichtung (T) der betreffenden Substrate (11) nachgeordneten Trocknungseinheit (16) zum Trocknen des strahlungshärtenden Druckfluids auf diesen Substraten (11), wobei die Trocknungseinheit (16) eine Kammer (17) mit einem durch ein Inertgas sauerstoffreduzierten gasförmigen Medium aufweist, wobei das sauerstoffreduzierte gasförmige Medium in der Kammer (17) einen Sauerstoffanteil von höchstens 1% aufweist, wobei zum Trocknen des strahlungshärtenden Druckfluids ein Elektronenstrahl-Generator (18) mit einem in der Kammer (17) auf das jeweilige Substrat (11) gerichteten Elektronenstrahl vorgesehen ist, wobei das Substrat (11) an der Mantelfläche (03) eines in einem Gestell der Bogendruckmaschine ortsfest angeordneten Transportzylinders (01) gehalten durch diese Kammer (17) hindurch geführt oder zumindest führbar ist, wobei der Transportzylinder (01) an seiner Mantelfläche (03) mindestens einen sich jeweils quer zur Transportrichtung (T) des betreffenden Substrats (11) erstreckenden Kanal (04) aufweist, wobei in dem betreffenden Kanal (04) jeweils mindestens ein an einer Welle (07) gelagerter Greifer (06) zum Halten des betreffenden Substrats (11) auf der Mantelfläche (03) dieses Transportzylinders (01) angeordnet ist, wobei der betreffende Greifer (06) in seinem das betreffende Substrat (11) auf der Mantelfläche (03) dieses Transportzylinders (01) haltenden Betriebszustand vollständig unterhalb einer durch die Mantelfläche (03) dieses Transportzylinders (01) gebildeten Ebene angeordnet ist, wobei der betreffende Kanal (04) an der Mantelfläche (03) des Transportzylinders (01) mit einer Abdeckung (08) abgedeckt ist, wobei die betreffende Abdeckung (08) und/oder die den mindestens einen Greifer (06) lagernde Welle (07) jeweils eine Kühleinrichtung aufweisen.

14. Bogendruckmaschine nach Anspruch 13, **dadurch gekennzeichnet, dass** ein erstes Kettenfördersystem zum Zuführen von zu trocknenden von dem mindestens einen Druckwerk zuvor bedruckten Substraten (11) zu dem Transportzylinder (01) der Trocknungseinheit (16) vorgesehen ist und/oder dass ein zweites Kettenfördersystem zum Abführen von in der Trocknungseinheit (16) getrockneten Substraten (11) vom Transportzylinder (01) der Trocknungseinheit (16) vorgesehen ist.

15. Bogendruckmaschine nach Anspruch 13 oder 14, **dadurch gekennzeichnet, dass** eine mit der Drehzahl des Transportzylinders (01) einhergehende Produktionsgeschwindigkeit der Bogendruckmaschine mindestens 10.000 Substrate (11) pro Stunde beträgt, wobei alle diese Substrate (11) durch die Kammer (17) der Trocknungseinheit (16) hindurch geführt werden.

## Claims

1. Transport cylinder (01) for transporting a sheet-format substrate (11), including at least one channel (04) extending in each case at its outer surface (03) in its axial direction, in each case at least one gripper (06), which is supported on a shaft (07), for holding the relevant substrate (11) on the outer surface (03) of this transport cylinder (01) being arranged in the relevant channel (04), and the relevant channel (04) being covered by a cover (08) at the outer surface (03) of this transport cylinder (01), **characterized in that** the relevant cover (08) and/or the shaft (07) supporting the at least one gripper (06) comprise a cooling unit.

2. Transport cylinder (01) according to claim 1, **characterized in that** its main body (02) is made of a casting material, and/or **in that** its outer surface (03) is configured to be at least over 90% closed.

3. Transport cylinder (01) according to claim 1 or 2, **characterized in that** this transport cylinder (01) is configured to be double-sized so that, at its circumference, two channels (04), which extend at the outer surface (03) in each case in its axial direction, are formed in a diametrically opposing manner.

4. Transport cylinder (01) according to claim 1 or 2 or 3, **characterized in that** the relevant cover (08) is configured in one piece by a solid steel sheet or by a solid metallic molded part, and/or **in that** the relevant cover (08), at the location of the relevant gripper (06), includes a recess (14) that is adapted to the contour of the relevant gripper (06).

5. Transport cylinder (01) according to claim 1 or 2 or 3 or 4, **characterized in that** the at least one gripper (06), in its operating state in which it holds the relevant substrate (11) on the outer surface (03) of this transport cylinder (01), is arranged completely beneath a plane formed by the outer surface (03) of this transport cylinder (01).

6. Transport cylinder (01) according to claim 1 or 2 or 3 or 4 or 5, **characterized in that** the relevant cooling unit comprises at least one pipe (09) extending in the axial direction of this transport cylinder (01), a liquid or gaseous cooling medium flowing, or at least being able to flow, through the relevant pipe (09), and/or **in that** the relevant cooling unit includes at least one bore hole (09), which is formed in the relevant cover (08) and/or in the relevant shaft (07) and extends in the axial direction of this transport cylinder (01), a liquid or gaseous cooling medium flowing, or at least being able to flow, through the relevant bore hole (09).

7. Transport cylinder (01) according to claim 6, **characterized in that** an inflow and/or an outflow of the cooling medium are in each case arranged at the end face of the main body (02) of this transport cylinder (01), in a region that is separate from its outer surface (03).

8. Drying unit (16) for drying a radiation-curing printing fluid on a sheet-format substrate (11), comprising a chamber (17) including a gaseous medium that is oxygen-reduced by an inert gas, the oxygen-reduced gaseous medium in the chamber (17) having an oxygen content of no more than 1%, an electron beam generator (18) including an electron beam that is directed at the substrate (11) in the chamber (17) being provided for drying the radiation-curing printing fluid, the substrate (11) being guided, or at least being guidable, through this chamber (17) while being held at the outer surface (03) of a transport cylinder (01), the transport cylinder (01), at its outer surface (03), including at least one channel (04) extending in each case transversely to the transport direction (T) of the relevant substrate (11), at least one gripper (06), which is supported on a shaft (07), for holding the relevant substrate (11) on the outer surface (03) of this transport cylinder (01) being in each case arranged in the relevant channel (04), the relevant gripper (06), in its operating state in which it holds the relevant substrate (11) on the outer surface (03) of this transport cylinder (01), being arranged completely beneath a plane formed by the outer surface (03) of this transport cylinder (01), the relevant channel (04) being covered by a cover (08) at the outer surface (03) of the transport cylinder (01), and the relevant cover (08) and/or the shaft (07) supporting the at least one gripper (06) each comprising a cooling unit.

9. Drying unit (16) according to claim 8, **characterized in that** it comprises a housing (22), which encloses the side facing the electron beam generator (18) of the transport cylinder (01) in a sheet section of at least 150°, at least during a production process.

10. Drying unit (16) according to claim 9, **characterized in that** the housing (22) enclosing the transport cylinder (01) comprises two molded parts (23; 24), which are arranged symmetrically with respect to a plane defined by the progression of the electron beam, their outer delimitation facing the outer surface (03) of the transport cylinder (01) in each case being adapted to the contour of this transport cylinder (01) and, for forming a gap (26), being arranged spaced apart in the range of no more than 3 mm from the outer surface (03) of the transport cylinder (01).

11. Drying unit (16) according to claim 10, **characterized in that** the two molded parts (23; 24) in each case comprise a shield (27; 28) comprising lead.

12. Drying unit (16) according to claim 10 or 11, **characterized in that** the respective gap (26) that is formed between one of the two molded parts (23; 24) and the outer surface (03) of the transport cylinder (01) extends in each case at the circumference of the transport cylinder (01) over a sheet section of at least 75°, and/or **in that** the respective gap (26) that is formed between one of the two molded parts (23; 24) and the outer surface (03) of the transport cylinder (01) in each case has a gap width in the range between 2 mm and 3 mm.

13. Sheet-fed printing press, comprising at least one printing unit for printing sheet-format substrates (11) with a radiation-curing printing fluid and comprising a drying unit (16), which is arranged downstream from the relevant printing unit in the transport direction (T) of the relevant substrates (11), for drying the radiation-curing printing fluid on these substrates (11), the drying unit (16) comprising a chamber (17) including a gaseous medium that is oxygen-reduced by an inert gas; the oxygen-reduced gaseous medium in the chamber (17) having an oxygen content of no more than 1%, an electron beam generator (18) including an electron beam that is directed at the respective substrate (11) in the chamber (17) being provided for drying the radiation-curing printing fluid, the substrate (11) being guided, or at least being guidable, through this chamber (17) while being held at the outer surface (03) of a transport cylinder (01) that is arranged in a stationary manner in a frame of the sheet-fed printing press, the transport cylinder (01), at its outer surface (03), including at least one channel (04) extending in each case transversely to the transport direction (T) of the relevant substrate (11), at least one gripper (06), which is supported on a shaft (07), for holding the relevant substrate (11) on the outer surface (03) of this transport cylinder (01) being in each case arranged in the relevant channel (04), the relevant gripper (06), in its operating state in which it holds the relevant substrate (11) on the outer surface (03) of this transport cylinder (01), being arranged completely beneath a plane formed by the outer surface (03) of this transport cylinder (01), the relevant channel (04) being covered by a cover (08) at the outer surface (03) of the transport cylinder (01), and the relevant cover (08) and/or the shaft (07) supporting the at least one gripper (06) each comprising a cooling unit.

14. Sheet-fed printing press according to claim 13, **characterized in that** a first chain conveyor system is provided for feeding substrates (11) to be dried, which were previously printed by the at least one printing unit, to the transport cylinder (01) of the drying unit (16), and/or **in that** a second chain conveyor system is provided for removing substrates (11) dried in the drying unit (16) from the transport cylinder (01) of the drying unit (16).

15. Sheet-fed printing press according to claim 13 or 14, **characterized in that** a production speed of the sheet-fed printing press that matches the rotational speed of the transport cylinder (01) is at least 10,000 substrates (11) per hour, all of these substrates (11) being guided through the chamber (17) of the drying unit (16).

## Revendications

1. Cylindre de transport (01) pour transporter un substrat (11) en forme de feuille, avec au moins un canal (04) s'étendant respectivement sur sa surface d'enveloppe (03) dans la direction axiale de celui-ci, dans lequel respectivement au moins une pince (06) montée sur un arbre (07) pour retenir le substrat (11) concerné sur la surface d'enveloppe (03) de ce cylindre de transport (01) est disposée dans le canal (04) concerné, dans lequel le canal (04) concerné sur la surface d'enveloppe (03) de ce cylindre de transport (01) est recouvert avec un cache (08), **caractérisé en ce que** le cache (08) concerné et/ou l'arbre (07) portant la au moins une pince (06) présentent un dispositif de refroidissement.

2. Cylindre de transport (01) selon la revendication 1, **caractérisé en ce que** son corps de base (02) est réalisé à partir d'un matériau coulé et/ou que sa surface d'enveloppe (03) est réalisée de manière fermée au moins sur 90 %.

3. Cylindre de transport (01) selon la revendication 1 ou 2, **caractérisé en ce que** ce cylindre de transport (01) est réalisé de manière deux fois plus grande, de sorte que sur sa périphérie deux canaux (04) s'étendant sur la surface d'enveloppe (03) respectivement dans la direction axiale de celui-ci sont réalisés de manière diamétralement opposée.

4. Cylindre de transport (01) selon la revendication 1 ou 2 ou 3, **caractérisé en ce que** le cache (08) concerné est réalisé d'une seule pièce par une tôle d'acier massive ou par une pièce moulée métallique massive et/ou que le cache (08) concerné présente à l'emplacement de la pince (06) concernée un évidement (14) adapté au contour de la pince (06) concernée.

5. Cylindre de transport (01) selon la revendication 1 ou 2 ou 3 ou 4, **caractérisé en ce que** la au moins une pince (06) dans son état de fonctionnement retenant le substrat (11) concerné sur la surface d'enveloppe (03) de ce cylindre de transport (01) est disposée entièrement au-dessous d'un plan formé par la surface d'enveloppe (03) de ce cylindre de transport (01) .

6. Cylindre de transport (01) selon la revendication 1 ou 2 ou 3 ou 4 ou 5, **caractérisé en ce que** le dispositif de refroidissement concerné présente au moins une conduite tubulaire (09) s'étendant dans la direction axiale de ce cylindre de transport (01), dans lequel la conduite tubulaire (09) concernée est traversée ou au moins peut être traversée par un réfrigérant liquide ou gazeux et/ou que le dispositif de refroidissement concerné présente au moins un trou (09) réalisé dans le cache (08) concerné et/ou dans l'arbre (07) concerné s'étendant dans la direction axiale de ce cylindre de transport (01), dans lequel le trou (09) concerné est traversé ou au moins peut être traversé par un réfrigérant liquide ou gazeux.

7. Cylindre de transport (01) selon la revendication 6, **caractérisé en ce qu'**une amenée et/ou une évacuation du réfrigérant est disposée respectivement frontalement sur le corps de base (02) de ce cylindre de transport (01) dans une zone séparée de la surface d'enveloppe (03) de celui-ci.

8. Unité de séchage (16) pour sécher un fluide sous pression durcissant par rayonnement sur un substrat (11) en forme de feuille, avec une chambre (17) avec un milieu gazeux réduit en oxygène par un gaz inerte, dans laquelle le milieu gazeux réduit en oxygène présente dans la chambre (17) un pourcentage d'oxygène de maximum 1 %, dans laquelle pour sécher le fluide sous pression durcissant par rayonnement un générateur de faisceau électronique (18) avec un faisceau électronique dirigé dans la chambre (17) sur le substrat (11) est prévu, dans laquelle le substrat (11) est guidé ou au moins peut être guidé à travers cette chambre (17) retenu sur la surface d'enveloppe (03) d'un cylindre de transport (01), dans laquelle le cylindre de transport (01) présente sur sa surface d'enveloppe (03) au moins un canal (04) s'étendant respectivement transversalement par rapport à la direction de transport (T) du substrat (11) concerné, dans laquelle respectivement au moins une pince (06) montée sur un arbre (07) pour retenir le substrat (11) concerné sur la surface d'enveloppe (03) de ce cylindre de transport (01) est disposée dans le canal (04) concerné, dans laquelle la pince (06) concernée dans son état de fonctionnement retenant le substrat (11) concerné sur la surface d'enveloppe (03) de ce cylindre de transport (01) est disposée entièrement au-dessous d'un plan formé par la surface d'enveloppe (03) de ce cylindre de transport (01), dans laquelle le canal (04) concerné sur la surface d'enveloppe (03) du cylindre de transport (01) est recouvert avec un cache (08), dans laquelle le cache (08) concerné et/ou l'arbre (07) portant la au moins une pince (06) présentent respectivement un dispositif de refroidissement.

9. Unité de séchage (16) selon la revendication 8, **caractérisée en ce qu'**elle présente un boîtier (22), lequel entoure la face du cylindre de transport (01) tournée vers le générateur de faisceau électronique (18) au moins pendant un processus de production dans une partie de feuille d'au moins 150°.

10. Unité de séchage (16) selon la revendication 9, **caractérisée en ce que** le boîtier (22) entourant le cylindre de transport (01) présente deux pièces moulées (23 ; 24), qui sont disposées de manière symétrique par rapport à un plan défini par le tracé du faisceau électronique, dans laquelle leur délimitation extérieure tournée vers la surface d'enveloppe (03) du cylindre de transport (01) est respectivement adaptée au contour de ce cylindre de transport (01) et pour la réalisation d'une fente (26) est disposée à une distance dans la plage de maximum 3 mm de la surface d'enveloppe (03) du cylindre de transport (01).

11. Unité de séchage (16) selon la revendication 10, **caractérisée en ce que** les deux pièces moulées (23 ; 24) présentent respectivement un blindage (27 ; 28) présentant du plomb.

12. Unité de séchage (16) selon la revendication 10 ou 11, **caractérisée en ce que** la fente (26) respective réalisée entre l'une des deux pièces moulées (23 ; 24) et la surface d'enveloppe (03) du cylindre de transport (01) s'étend sur la périphérie du cylindre de transport (01) respectivement sur une partie arquée d'au moins 75° et/ou que la fente (26) respective réalisée entre l'une des deux pièces moulées (23 ; 24) et la surface d'enveloppe (03) du cylindre de transport (01) présente respectivement une largeur de fente dans la plage comprise entre 2 mm et 3 mm.

13. Presse à feuilles avec au moins un groupe d'impression pour imprimer des substrats (11) en forme de feuille avec un fluide sous pression durcissant par rayonnement et avec une unité de séchage (16) située en aval du groupe d'impression concerné dans la direction de transport (T) des substrats (11) concernés pour sécher le fluide sous pression durcissant par rayonnement sur ces substrats (11), dans laquelle l'unité de séchage (16) présente une chambre (17) avec un milieu gazeux réduit en oxygène par un gaz inerte, dans laquelle le milieu gazeux réduit en oxygène présente dans la chambre (17) un pourcentage d'oxygène de maximum 1 %, dans laquelle pour sécher le fluide sous pression durcissant par rayonnement un générateur de faisceau électronique (18) avec un faisceau électronique dirigé dans la chambre (17) sur le substrat (11) respectif est prévu, dans laquelle le substrat (11) est guidé ou au moins peut être guidé à travers cette chambre (17) retenu sur la surface d'enveloppe (03) d'un cylindre de transport (01) disposé fixement dans un bâti de la presse à feuilles, dans laquelle le cylindre de transport (01) présente sur sa surface d'enveloppe (03) au moins un canal (04) s'étendant respectivement transversalement par rapport à la direction de transport (T) du substrat (11) concerné, dans laquelle respectivement au moins une pince (06) montée sur un arbre (07) pour retenir le substrat (11) concerné sur la surface d'enveloppe (03) de ce cylindre de transport (01) est disposée dans le canal (04) concerné, dans laquelle la pince (06) concernée dans son état de fonctionnement retenant le substrat (11) concerné sur la surface d'enveloppe (03) de ce cylindre de transport (01) est disposée entièrement au-dessous d'un plan formé par la surface d'enveloppe (03) de ce cylindre de transport (01), dans laquelle le canal (04) concerné sur la surface d'enveloppe (03) du cylindre de transport (01) est recouvert avec un cache (08), dans laquelle le cache (08) concerné et/ou l'arbre (07) portant la au moins une pince (06) présentent respectivement un dispositif de refroidissement.

14. Presse à feuilles selon la revendication 13, **caractérisée en ce qu'**un premier système de transport à chaînes pour amener des substrats (11) préalablement imprimés destinés à être séchés par le au moins un groupe d'impression au cylindre de transport (01) de l'unité de séchage (16) est prévu et/ou qu'un deuxième système de transport à chaînes pour évacuer des substrats (11) séchés dans l'unité de séchage (16) du cylindre de transport (01) de l'unité de séchage (16) est prévu.

15. Presse à feuilles selon la revendication 13 ou 14, **caractérisée en ce qu'**une vitesse de production de la presse à feuilles associée à la vitesse de rotation du cylindre de transport (01) atteint au moins 10 000 substrats (11) par heure, dans laquelle tous ces substrats (11) sont guidés à travers la chambre (17) de l'unité de séchage (16).
